# EUROPEAN PATENT SPECIFICATION

(11) **EP 1 850 714 B1**
(45) Date of publication and mention of the grant of the patent: **04.06.2008**
(21) Application number: 06701258.3
(22) Date of filing: 10.01.2006
(51) Int. Cl.: A47J 31/40

(54) **FOOD PRODUCT DISPENSER**
NAHRUNGSMITTELPRODUKTSPENDER
DISTRIBUTEUR DE PRODUITS ALIMENTAIRES

(30) Priority: 27.01.2005 IT PN20050006
(43) Date of publication of application: 07.11.2007
(73) Proprietor: N&W Global Vending S.p.A., 24030 Valbrembo (Bergamo) (IT)
(72) Inventor: CARRARA, Osvaldo, I-24020 Casnigo (Bergamo) (IT); PERSONENI, Silvano, I-24030 Mazzoleni (Bergamo) (IT)
(74) Representative: Gonella, Mario
(86) International application number: PCT/EP2006/050123
(87) International publication number: WO 2006/079580

(56) References cited:
- EP-A- 1 159 906
- GB-A- 1 241 784
- US-A- 3 400 861
- US-A- 4 461 405
- US-A- 5 287 993
- US-A1- 2003 024 945

## Description

The present invention refers to a food product dispenser, in particular a dispenser adapted to deal out powders, granules or thick liquids in an automatic vending machine for food products.

Prior-art food product dispensers, such as dispensers of powder products in general, ground coffee, tea leaves, products in granular form or in the form of thick liquids, are generally known to comprise a container for storing a product, a screw feeder or similar arrangement to dispense such product, which is adapted to take a metered amount of product from the container and convey it towards a dispensing mouth or outlet, and a stirrer adapted to stir the product inside the container in view of preventing it from agglomerating into lumps or clots that might cause the product to be dispensed in an inappropriate amount in view of the intended use thereof. The stirrer, which is generally constituted by arms extending into the storage room defined by said container, usually operates by performing a rotary motion that is brought about either by the same dispensing screw being driven to rotate about its own longitudinal rolling axis by an electric motor or, possibly, even manually by an operator. According to other solutions that have been devised to such purpose - and, for the matter, constructively more complicated to embody - the stirrer is driven independently of the dispensing screw.

Prior-art dispensers that are solely provided with the stirrer have the disadvantage deriving from the fact that, in the areas of the product storage room that are not reached by the stirring action and, above all, in the region that lies closer to the walls of the storage container, a certain amount of product may be left stagnating without being ever dispensed, actually. The presence inside the storage container of product that fails to be dispensed and, therefore, remains there for extended periods of time may cause the food product stored therein to deteriorate, or anyway to undergo some decay, each time the container is replenished.

To at least partially do away with this problem, dispensers of powder products have been proposed, in which the stirrer comprises a scraping member adapted to remove the product from the walls of the storage container. An example of such stirrer is disclosed in US patent publication No. 5,113,917. Anyway, since the stirrer is driven to rotate inside the storage container and the scraper is an integral part of the same stirrer, in view of enabling the scraper to adhere against, i.e. be in contact with the walls of the container the need arises for the latter to be given the shape of a solid of revolution, such as for instance a cylinder or a truncated cone. Now, these shapes have the disadvantage of being rather cumbersome, i.e. requiring a lot of space, and this is certainly a drawback when the need arises for a certain number of dispensers of the above-described kind to be accommodated and installed within a single and same casing of a food-product vending machine. The narrow, restricted and irregularly shaped spaces that are generally available within the outer casings of vending machines, along with the need for various such containers for different products such as coffee, sugar, powder milk, chocolate, tea, and the like, in view of enabling a user to select among a satisfactorily wide choice of beverages, practically force vending machine manufacturers to do without the use of dispensers that make use of storage containers in the shape of a solid of revolution and are provided with a rotary scraper to remove product from the container walls. Providing vending machines with correspondingly larger outer casings is again not a satisfactory solution to such problem, since the outer dimensions of casings and cabinets in general are subject to restrictions, such as the ones imposed by the dimensions of a door of the room in which the vending machine has to be installed.

In view of overcoming the above-described drawbacks, vending machine manufacturers have therefore proposed the use of product dispensers making use of a rotary device for stirring and mixing the product stored in a container, along with a dedicated arrangement for removing product accumulating along or sticking to the walls of the same container. Such arrangements are substantially comprised of springs that are first loaded by the motion of the dispensing screw and then instantly released so that the abrupt extension thereof causes them to hit the wall of the container, thereby inducing a vibration that causes product heaping up on or sticking to said wall to separate therefrom. A dispenser having such an arrangement is disclosed in US 4,461,405. If, on the one hand, arrangements of this kind allow containers of any desirable shape to be used, actually, thereby solving the afore-noted space problems inside the outer casing of vending machines, on the other hand they still have a drawback in that they give rise to a noise that might annoy the users of the vending machine, thereby making the latter scarcely appealing to the public. An additional drawback connected with arrangements of the above-noted kind lies in the fact that, after a certain number of operating cycles, the springs so repeatedly impinging against the walls of the container are likely to cause the same container to crack or break down, thereby enabling product to leak out. Furthermore, the springs - generally of the wound kind - prove rather awkward to clean. In the case that the container is in a shape differing from the one of a solid of revolution, the same drawback as already mentioned hereinbefore will also come up again owing to areas of the storage volume of the container not being reached by the action of the stirrer, so that the same problems as cited above, and deriving from product being enabled to heap up and stagnate in these areas, will arise also in this case.

It is therefore an object of the present invention to provide a dispenser of food products that does away with the drawbacks and disadvantages of prior-art dispensers.

Within this general object, it is a purpose of the present invention to provide a dispenser of food products that enables a metered amount of product to be repeatedly dealt out in a reliable manner, even after a relatively high number of operating hours of the dispenser, regardless of the latter being installed to operate in particularly moist environments that tend to cause soluble powders to clot.

It is a further purpose of the present invention to provide a dispenser of food products that is capable of operating in a noiseless manner and enables product storage containers in a box-like shape, even of a reduced height, to be used.

Yet another purpose of the present invention is to provide a dispenser of food products that is effective in preventing clots or lumps of product to be dispensed from forming inside the storage container and, at the same time, preventing the same product from heaping up on and sticking to the walls of the container.

A further purpose of the present invention is to provide a dispenser of food products that is capable of being accommodated, along with other dispensers of the same kind, inside any pre-existing vending machine.

Another purpose of the present invention is to provide a dispenser of food products that is not cumbersome, i.e. takes up just a reduced space, and is constructively simple to implement.

According to the present invention, these aims, along with further ones that will become apparent from the following disclosure, are reached in a dispenser of food products incorporating the features and characteristics as recited in claim 1 appended hereto.

Further features and advantages of the present invention will be readily understood from the description that is given below by way of nonlimiting example with reference to the accompanying drawings, in which:

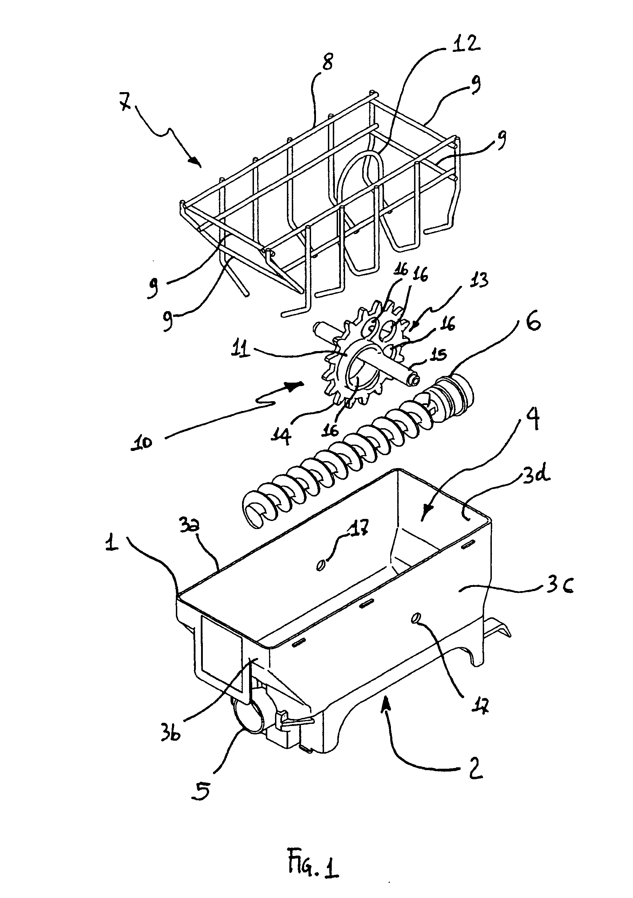

- Figure 1 is a perspective exploded view of the food product dispenser according to the present invention;

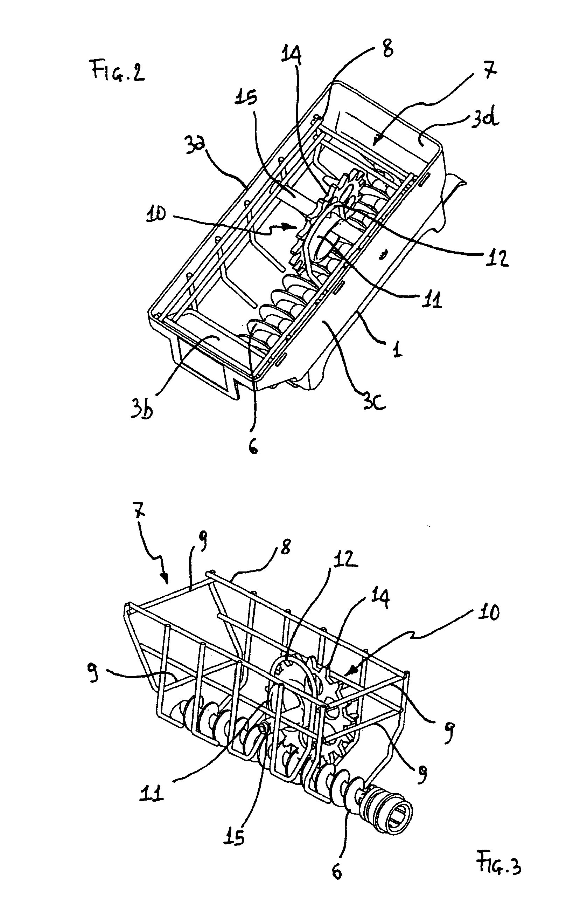

- Figure 2 is a perspective view of the food product dispenser shown in Figure 1, as viewed in the assembled state thereof;
- Figure 3 is a perspective view of the assembled food product dispenser shown in Figure 2, from which the container has however been removed.

With reference to the above-listed Figures, the food product dispenser, as intended in particular for dispensing powders, granules or thick liquids, comprises a container 1 having a substantially box-like shape formed of two pairs of mutually facing planar walls 3a, 3c and 3b, 3d and a bottom region 2 in a hopper-like conformation created through the use of curved or inclined walls. The container walls 3a, 3b, 3c, 3d and the hopper 2 define a containment or storage volume 4 for storing a food product, in particular such food product in a powder form or in the form of granules or a thick liquid, therein. The container 1 is also provided with a removable cover (not shown in the Figures).

At the afore-mentioned bottom region 2 in a hopper-like conformation, there is provided a dispensing mouth or outlet 5, from which the product stored in the container 1 is dealt out. A feeder screw 6, or the like, is arranged inside the container 1, close to said dispensing outlet 5. The screw 6 is driven rotatably by motor means of a kind that is largely known as such in the art (not shown in the Figures). Owing to the rotation of this screw 6, a portion of product in the container 1 is taken therefrom and conveyed towards the dispensing outlet 5.

The dispenser further comprises a scraper member 7 arranged within the container 1 so as to be able to extend close to surfaces of the planar walls 3a, 3b, 3c, 3d facing the inner containment volume 4 of the container 1. The scraper 7 comprises a net-like, reticular structure 8 that substantially replicates the shape of said inner containment volume 4 of the container 1, so as to perform as a remover of soluble product that may deposit or clog onto said planar walls 3a, 3b, 3c, 3d.

It can be readily appreciated that, in this case, the scraper 7 is particularly convenient to remove and, as a result, quite easy to clean.

The scraper 7 is driven by actuating means 10, so that it can perform a reciprocating translatory motion. By the effect of such motion, the scraper 7 is therefore capable of displacing in a direction parallel to the planar walls 3a, 3c of the container 1, thereby removing the product heaping up on said walls owing to the reticular structure 8 being so caused to slide, i.e. scrape against the surface of said walls. The product that heaps up on the walls 3b and 3d, which are arranged transversally relative to the moving direction of the scraper 7, is in turn removed therefrom by the action of first stirring means 9 that are in turn arranged transversally relative to the displacing direction of the scraper 7. The stirring means 9, further to causing the product to thoroughly mix up as the scraper 7 moves back and forth, cause the layer of product settled onto the planar walls 3b and 3d to crumble down when the scraper approaches these walls. The number of stirring means 9 provided may be varied in accordance with the actual shape of the inner containment volume 4 of and the kind of product stored in the container 1.

To drive the scraper 7 in the above-indicated manner, the actuating means 10 comprise cam means 11, the axis of rotation of which is arranged transversally relative to the direction of translatory motion of the scraper 7. These cam means 11 are arranged so as to engage a curved rod 12 provided on said scraper 7. The rod 12 is bent so as to form a reverse U, i.e. a U arranged so that the concavity thereof faces downwards. This rod 12 accommodates the cam 11 between the parallel arms or flanks thereof.

For the construction of the cam means 11 to be further simplified, these means can be comprised of a simple eccentric. The interaction of the rotary motion of the cam means 11 with the curved rod 12 generates the reciprocating translatory motion of the scraper 7.

Those skilled in the art will readily appreciate that the cam means 11, or any similar means that may be used, can also generate a more complex motion, for example by adding oscillations thereto, in view of more effectively brushing up the walls of the dispenser.

The cam means 11 are associated to second stirring means 13, which are comprised of a cogwheel 14 and a shaft 15 that is rotatably associated to the container 1 through holes 17 provided in two mutually facing walls 3a, 3c. The cogwheel 14 is provided with through-holes 16 that are effective in bringing about a stirring effect in the soluble product within the containment volume 4 of the container 1 when the actuating means 10 are operated. In an advantageous manner, the cam means 11, the stirring means 13 and the shaft 15 are provided as an integral, unitary-piece construction and, jointly, form said actuating means 10. In turn, these actuating means 10 are mechanically linked to and constantly engaged with the feeding screw 6, so that, whenever product is required to be dispensed, a mixing effect is induced to a certain extent in the same product so as to facilitate its outflow from the containment volume 4 in the correct metered amount.

The dispensing screw 6 is arranged so that the axis of rotation thereof extends in the direction of translatory motion of the scraper 7.

One or more dispensers of the above-described kind may be accommodated within a beverage vending machine, for instance upstream of a brewing unit of a type largely known as such in the art, so that the products stored in the containers can be used without any waste in preparing the beverages that are from time to time selected by the users of the vending machine according to their own tastes.

Fully apparent from the above description is therefore the ability of the dispenser according to the present invention to effectively reach the aims and advantages cited afore, through the provision of a dispenser of food products that enables said products to be repeatedly dealt out in metered amounts in a fully reliable manner, while preventing the same products from clotting or agglomerating, as well as from heaping up on and sticking to the walls of the related container. Fully apparent is also the ability of the dispenser according to the present invention to enable containers having a substantially box-shaped, particularly "flat" (i.e. much wider than high) body to be used instead of the traditional containers in the form of a solid of revolution. This solution involves lower space requirements, i.e. is much less cumbersome, so that it enables one or more such dispensers to be accommodated within the casing of possibly existing vending machines.

In addition, the food product dispenser according to the present invention is advantageously simple to manufacture and particularly quiet in operation.

It shall be appreciated that the materials used, as well as the shape and the sizing of the various parts, may each time be selected so as to more appropriately meet the particular requirements or suit the particular application.

It shall further be appreciated that the various parts forming the object of the present invention shall certainly not be solely embodied in the manner that has been described and illustrated hereinbefore, but can rather be implemented in many other embodiments - although not specifically illustrated here - without departing from the scope of the present invention, defined by the appended claims.

## Claims

1. Food product dispenser, in particular such dispenser intended for dealing out metered amounts of powder products in general, ground coffee, tea leaves, products in granular form or in the form of thick liquids in a beverage or food-item vending machine, comprising:
- a box-shaped container (1) for storing a food product, comprising at least a substantially planar wall portion (3a, 3b, 3c, 3d) and a dispensing outlet (5);
- scraper means (7) provided within said container (1) and extending in close proximity of the surface of said wall portion (3a, 3b, 3c, 3d) for removing said product from said wall;
- actuating means (10) for driving said scraper means (7),
said scraper means (7) being operated by said actuating means (10) to displace in a direction parallel to at least a substantially planar wall portion (3a, 3b, 3c, 3d) with a reciprocating translatory motion
**characterised in that** said scraper means (7) comprise a reticular structure (8) that substantially replicates the shape of the inner containment volume (4) of said container.

2. Food product dispenser according to claim 1, wherein said scraper means (7) comprise one or more first stirring means (9) that extend in a direction running transversally to the direction of said reciprocating translatory motion.

3. Food product dispenser according to any of the preceding claims, wherein said actuating means (10) comprise cam means (11) arranged to rotate about an axis extending transversally to the direction of the reciprocating translatory motion of said scraper means (7).

4. Food product dispenser according to claim 3, wherein said cam means (11) are arranged to engage a curved rod (12) provided on said scraper means (7).

5. Food product dispenser according to claim 3 or 4, wherein said cam means (11) are associated to second stirring means (13) comprising a cogwheel (14) and a shaft (15) rotatably associated to the container (1).

6. Food product dispenser according to any of the preceding claims, comprising a dispensing screw (6) driven by motor means to take a portion of said food product from the container (1) and conveying said portion towards said dispensing outlet (5), said screw (6) being mechanically linked to said actuating means (10) to operate said scraper means (7).

7. Food product dispenser according to claim 6, wherein said screw (6) extends in the direction of the reciprocating translatory motion of said scraper means (7).

8. Beverage vending machine comprising a food product dispenser according to claims 1 to 7.

## Patentansprüche

1. Nahrungsmittelprodukt-Ausgabevorrichtung, im Besonderen eine derartige Ausgabevorrichtung, die zum Abgeben dosierter Mengen von Pulverprodukten im Allgemeinen, gemahlenem Kaffee, Teeblättern, Produkten in körniger Form oder in der Form von dicken Flüssigkeiten in einem Getränke- oder Nahrungsmittelartikel-Verkaufsautomaten dient, umfassend:
- einen kastenförmigen Behälter (1) zum Lagern eines Nahrungsmittelproduktes, der wenigstens einen im Wesentlichen planaren Wandabschnitt (3a, 3b, 3c, 3d) und einen Ausgabeauslass (5) umfasst;
- eine Abstreifeinrichtung (7), die in dem Behälter (1) vorhanden ist und sich in enger Nähe der Oberfläche des Wandabschnitts (3a, 3b, 3c, 3d) erstreckt, um das Produkt von der Wand zu entfernen;
- eine Betätigungseinrichtung (10) zum Antreiben der Abstreifeinrichtung (7), wobei die Abstreifeinrichtung (7) durch die Betätigungseinrichtung (10) betätigt wird, um sich mit einer hin- und hergehenden Translationsbewegung in eine Richtung parallel zu wenigstens einem im Wesentlichen planaren Wandabschnitt (3a, 3b, 3c, 3d) zu verschieben, **dadurch gekennzeichnet, dass** die Abstreifeinrichtung (7) eine netzartige Struktur (8) umfasst, die im Wesentlichen die Form des inneren Beinhaltungsvolumens (4) des Behälters nachbildet.

2. Nahrungsmittelprodukt-Ausgabevorrichtung nach Anspruch 1, wobei die Abstreifeinrichtung (7) eine oder mehrere Rühreinrichtungen (9) umfasst, die sich in eine Richtung erstrecken, die quer zu der Richtung der hin- und hergehenden Translationsbewegung verläuft.

3. Nahrungsmittelprodukt-Ausgabevorrichtung nach einem der vorhergehenden Ansprüche, wobei die Betätigungseinrichtung (10) eine Kurveneinrichtung (11) umfasst, die angeordnet ist, um sich um eine Achse zu drehen, die sich quer zu der Richtung der hin- und hergehenden Translationsbewegung der Abstreifeinrichtung (7) erstreckt.

4. Nahrungsmittelprodukt-Ausgabevorrichtung nach Anspruch 3, wobei die Kurveneinrichtung (11) angeordnet ist, um mit einer gekrümmten Stange (12), die an der Abstreifeinrichtung (7) vorhanden ist, in Eingriff zu kommen.

5. Nahrungsmittelprodukt-Ausgabevorrichtung nach Anspruch 3 oder 4, wobei die Kurveneinrichtung (11) mit einer zweiten Rühreinrichtung (13) verbunden ist, die ein Zahnrad (14) und eine Welle (15), die drehbar mit dem Behälter (1) verbunden ist, umfasst.

6. Nahrungsmittelprodukt-Ausgabevorrichtung nach einem der vorhergehenden Ansprüche, die eine Ausgabeschnecke (6) umfasst, die durch eine Motoreinrichtung angetrieben wird, um einen Teil des Nahrungsmittelprodukts aus dem Behälter (1) zu nehmen und den Teil zu dem Ausgabeauslass (5) hin zu fördern, wobei die Schnecke (6) mit der Betätigungseinrichtung (10) mechanisch verbunden ist, um die Abstreifeinrichtung (7) zu betätigen.

7. Nahrungsmittelprodukt-Ausgabevorrichtung nach Anspruch 6, wobei sich die Schnecke (6) in die Richtung der hin- und hergehenden Translationsbewegung der Abstreifeinrichtung (7) erstreckt.

8. Getränke-Verkaufsautomat, der eine Nahrungsmittelprodukt-Ausgabevorrichtung nach den Ansprüchen 1 bis 7 umfasst.

## Revendications

1. Distributeur de produits alimentaires, en particulier un tel distributeur destiné à distribuer des quantités dosées de produits en poudre en général, du café moulu, des feuilles de thé, des produits sous forme granulaire ou sous la forme de liquides épais dans un distributeur automatique de boissons ou d'articles alimentaires, comprenant :
- un récipient en forme de boîte (1) pour stocker un produit alimentaire, comprenant au moins une portion de paroi essentiellement plane (3a, 3b, 3c, 3d) et un orifice de distribution (5) ;
- des moyens pour racler (7) fournis à l'intérieur dudit récipient (1) et s'étendant de manière très proche de la surface de ladite portion de paroi (3a, 3b, 3c, 3d) pour retirer ledit produit de ladite paroi ;
- des moyens d'actionnement (10) pour entrainer lesdits moyens pour racler (7),
lesdits moyens pour racler (7) étant actionnés par lesdits moyens d'actionnement (10) pour se déplacer dans une direction parallèle à au moins une portion de paroi essentiellement plane (3a, 3b ,3c, 3d) avec un mouvement de translation alternatif
**caractérisé en ce que** lesdits moyens pour racler (7) comprennent une structure réticulaire (8) qui reproduit essentiellement la forme du volume de confinement interne (4) dudit récipient.

2. Distributeur de produits alimentaires selon la revendication 1, dans lequel lesdits moyens pour racler (7) comprennent un ou plusieurs premiers moyens pour mélanger (9) qui s'étendent dans une direction courant transversalement à la direction dudit mouvement de translation alternatif.

3. Distributeur de produits alimentaires selon l'une quelconque des revendications précédentes, dans lequel lesdits moyens d'actionnement (10) comprennent des moyens de came (11) disposés pour tourner autour d'un axe s'étendant transversalement à la direction du mouvement de translation alternatif desdits moyens pour racler (7).

4. Distributeur de produits alimentaires selon la revendication 3, dans lequel lesdits moyens de came (11) sont disposés pour s'engager dans une tige courbée (12) fournie sur lesdits moyens pour racler (7).

5. Distributeur de produits alimentaires selon la revendication 3 ou 4, dans lequel lesdits moyens de came (11) sont associes à des seconds moyens pour mélanger (13) comprenant une roue crantée (14) et un arbre (15) associé au récipient (1) de manière à pouvoir tourner.

6. Distributeur de produits alimentaires, selon l'une quelconque des revendications précédentes, comprenant une vis de distribution (6) entraînée par des moyens motorisés pour prendre une portion dudit produit alimentaire du récipient (1) et transporter ladite portion en direction dudit orifice de distribution (5), ladite vis (6) étant reliée mécaniquement aux dits moyens d'actionnement (10) pour actionner lesdits moyens pour racler (7).

7. Distributeur de produits alimentaires selon la dans lequel ladite vis (6) s'étend dans la direction du mouvement de translation alternatif desdits moyens pour racler (7).

8. Distributeur automatique de boissons comprenant un distributeur de produits alimentaires selon les revendications 1 à 7.
